# EUROPÄISCHE PATENTSCHRIFT

(11) **EP 2 979 926 B1**
(45) Veröffentlichungstag und Bekanntmachung des Hinweises auf die Patenterteilung: **28.08.2019**
(21) Anmeldenummer: 15175785.3
(22) Anmeldetag: 08.07.2015
(51) Int. Cl.: F21S 41/64, F21S 41/25, F21S 41/20, F21S 41/43, F21S 41/50, F21S 43/20, F21S 43/50, B60Q 3/74

(54) **FAHRZEUGLEUCHTE**
VEHICLE LAMP
FEU DU VÉHICULE

(30) Priorität: 28.07.2014 AT 505282014
(43) Veröffentlichungstag der Anmeldung: 03.02.2016
(73) Patentinhaber: ZKW Group GmbH, 3250 Wieselburg (AT)
(72) Erfinder: LUGER, Andreas, 3232 Bischofstetten (AT)
(74) Vertreter: Patentanwaltskanzlei Matschnig & Forsthuber OG

(56) Entgegenhaltungen:
- WO-A1-2008/072194
- DE-A1- 10 233 719
- DE-A1- 19 704 426
- DE-A1-102009 009 725
- FR-B1- 2 927 858
- JP-A- 2013 073 691
- KR-A- 20110 084 785

## Beschreibung

Die Erfindung betrifft einen Kraftfahrzeugscheinwerfer mit den Merkmalen gemäß dem Oberbegriff des Anspruchs 1. Der Einsatzbereich der Erfindung ist besonders für die Anwendung in Kraftfahrzeug(KFZ)-Hauptscheinwerfern gedacht.

Die letzten Jahre haben gezeigt, dass auf Kundenseite immer wieder der Wunsch geäußert wird, lichttechnische Elemente eines KFZ-Scheinwerfers wie z.B. Lichtquelle, Reflektoren, Linsen, Leuchtstäbe etc. in der Kalterscheinung (d.h. Scheinwerfer bzw. Leuchteneinrichtung nicht im Betrieb) hinter hochglänzenden/verspiegelten Abdeckungen zu verbergen, wohingegen diese in der Warmerscheinung (d.h. Scheinwerfer bzw. Leuchteneinrichtung im Betrieb) durch die Abdeckung hindurch sichtbar sind und die Beleuchtungs- und/oder Signalgebungsfunktionalität nicht beeinträchtigen.

Die bisher vorgeschlagenen Konzepte zum Erfüllen des genannten Kundenwunsches wiesen alle den Nachteil auf, dass die Abdeckungen entweder zu transparent waren und somit die Sicht auf die lichttechnischen Elemente nicht ausreichend verdeckt haben oder andererseits zwar einen akzeptablen Einsichtschutz geboten haben, aber das von der Leuchteneinrichtung ausgestrahlte Licht zu stark absorbiert bzw. reflektiert und daher das Licht bzw. die Lichtverteilung zu stark beeinflusst haben.

Ein bekanntes Konzept ist der Einsatz eines teilweise lichtdurchlässigen Spiegels, der auch als halbdurchlässiger Spiegel, Einwegspiegel, Spionspiegel, Polizeispiegel oder venezianischer Spiegel bezeichnet wird, als Abdeckung für Leuchten. Teilweise lichtdurchlässige Spiegel sind einem Fachmann hinlänglich bekannt. Dabei handelt es sich um einen lichtdurchlässigen Bauteil (z.B. eine transparente Glasscheibe), der auf einer Seite mit einer dünnen lichtreflektierenden Schicht verspiegelt ist, wohingegen die andere Seite des Bauteils das Licht ungehindert durchlässt. Der Effekt des venezianischen Spiegels basiert darauf, dass es auf der beschichteten Seite der Scheibe sehr hell und auf der anderen Seite sehr dunkel ist. Durch diesen Helligkeitsunterschied wird vom hellen Bereich aus die Scheibe vom Betrachter als undurchsichtiger Spiegel und vom dunklen Bereich aus als transparent wahrgenommen.

Die DE 9302516 U1 beschreibt die Ausführung einer Leuchtenabdeckung als halbdurchlässigen Spiegels, die im "Aus"-Zustand der Leuchte nahezu lichtundurchlässig und verspiegelt ist, wohingegen sie im "Ein"-Zustand der Leuchte ihre Spiegeleigenschaft verliert und lichtdurchlässig wird.

In der DE 102 61 648 B4 ist ein halbdurchlässiger Spiegel in einem Leuchtengehäuse beschrieben, durch den im eingeschaltetem Zustand der Leuchte eine Sicht auf Details innerhalb des Leuchtengehäuses möglich ist, wohingegen der Spiegel im ausgeschalteten Zustand wie ein normaler Spiegel wirkt und den Blick in das Leuchteninnere verwehrt.

Die DE 200 18 807 U1 beschreibt die Anwendung eines halbdurchlässigen Spiegels, durch den bei diffusem Lichteinfall die Sicht auf einen Reflektor (d.h. Rückstrahler) eines Straßenfahrzeugs verwehrt wird, während gerichtete Lichtstrahlen auf den Reflektor auftreffen und zurückgeworfen werden.

Die DE 20 2008 011 128 U1 offenbart eine Abdeckvorrichtung für ein Leuchtmittel aus einem lichtdurchlässigen Material mit einem Abdeckelement und einer Schicht, die auf der Oberfläche des Abdeckelements aufgebracht ist, wobei die Schicht für sichtbares Licht einen Transmissionsgrad von wenigstens 0,12 und einen Reflexionsgrad von wenigstens 0,35 aufweist.

Die WO 2008/072194 A1 offenbart eine Leuchtvorrichtung und Lichttherapievorrichtung mit einem steuerbaren Absorber und einer halbdurchlässigen Schicht.

Die Praxis hat jedoch gezeigt, dass eine Abdeckung basierend auf einem autarken teilweise lichtdurchlässigen Spiegel für die Anwendung in KFZ-Scheinwerfern keine befriedigende Lösung darstellt. Es hat sich in Versuchen mit Prototypen herausgestellt, dass ein Reflexionsgrad von ca. 70% oder höher notwendig ist, um einen vom Kunden gewünschten hochreflektierenden, nicht transparenten Blendeneffekt in der Kalterscheinung eines Scheinwerfers mit Hilfe eines autarken teilweise lichtdurchlässigen Spiegels zu gewährleisten. Durch diesen hohen Reflexionsgrad gehen ca. 70% oder mehr des Lichts, das von der Leuchteneinrichtung ausgestrahlt wird, in der Abdeckung verloren. Diese hohen Lichtverluste sind bei Scheinwerfern nicht akzeptabel, da die Effizienz der Leuchteneinrichtung extrem abnimmt. Eine Reduzierung des Reflexionsgrades und eine damit verbundene Steigerung des Transmissionsgrades führen dazu, dass die Abdeckung vor den lichttechnischen Elementen wiederum zu transparent erscheint.

Weitere bekannte Konzepte setzen elektrochrome Materialien wie elektrochrome Elemente und Scheiben oder einen Polymer-Flüssigkristallfilm aufweisende LC-Gläser (auch als PDLC-Gläser bezeichnet) ein, deren Transmissionseigenschaften für Licht in Abhängigkeit einer angelegten elektrischen Spannung veränderbar sind. Elektrochrome Materialien und LC-Gläser sind dem einschlägigen Fachmann hinlänglich bekannt. Im opaken Zustand haben elektrochrome Materialien und LC-Gläser ein milchig undurchsichtiges Erscheinungsbild und kommen häufig bei Gebäudeverglasungen, Panoramadächern, Rückspiegeln, Fahrzeugverglasungen und Displays sowie bei Innenraumverglasungen, die eine private Absonderung ("privacy") bewirken sollen, zum Einsatz.

Die Verwendung von Flüssigkristallscheiben zur Abdeckung von Beleuchtungseinrichtungen an Kraftfahrzeugen ist aus der DE 8812322 U1 bekannt geworden.

Die FR 2 605 086 B1 offenbart die Verwendung elektrochromer Materialschichten, die im opak (d.h. lichtundurchlässigen) geschalteten Zustand die Sicht in einen Scheinwerfer verwehren und im lichtdurchlässig geschalteten Zustand den Austritt eines Scheinwerfer-Lichtbündels erlauben.

Die FR 2 927 858 B1 offenbart die Verwendung eines elektrochromen Elements als Ausführung eines Sichtschutzes auf einen KFZ-Scheinwerfer. Hierin wird ein Trägerelement mit elektrochromem Material beaufschlagt, wodurch der Lichtdurchtritt in Abhängigkeit des gewünschten Schaltzustands des elektrochromen Materials gesperrt oder erlaubt ist.

Die FR 2 965 889 A1 beschreibt ein elektrochromes Element als Abdeckscheibe, um den Blick auf ein Scheinwerfermodul durch Änderung des Transmissionsgrads zu maskieren und somit das Erscheinungsbild des Scheinwerfers zu verändern.

In der US 8,256,940 B2 ist ein Abdeckglas für einen Hauptscheinwerfer geoffenbart. Das Abdeckglas ist mit einem elektrochromen Film ausgestattet, der es gestattet zwischen einem lichtdurchlässigen und einem lichtundurchlässigen Zustand umzuschalten. Damit kann einerseits die Funktion des Scheinwerfers gesteuert werden und andererseits werden unerwünschte Reflexionen von außen in den Scheinwerfer eintretenden Lichts verhindert. Die Erscheinungsform bzw. der Designeindruck kann durch den elektrochromen Film an Kundenwünsche angepasst werden.

FR 2 927 858 A1 offenbart einen gattungsgemäßen Kraftfahrzeugscheinwerfer.

Eine Abdeckung basierend auf einem elektrochromen Material bzw. einem LC-Glas weist jedoch kein hochglänzendes und verspiegeltes Erscheinungsbild (Design) auf und entspricht daher nicht dem eingangs genannten Kundenwunsch.

Es ist daher eine Aufgabe der Erfindung, einen Kraftfahrzeugscheinwerfer zu schaffen, der eine Abdeckung aufweist, die in der Kalterscheinung (d.h. Leuchteneinrichtung bzw. Scheinwerfer nicht in Betrieb) als hochglänzend wahrgenommen wird und gleichzeitig den Einblick auf die dahinterliegenden lichttechnischen Elemente verhindert. Dies bedeutet, dass in der Kalterscheinung beim Betrachter der Eindruck entstehen soll, dass sich vor der Lichtfunktion eine hochglänzende Sichtschutz-Abdeckung befindet und somit den Blick auf die lichttechnischen Elemente der Leuchteneinrichtung verwehrt. Andererseits soll die Abdeckung jedoch in der Warmerscheinung (d.h. Leuchteneinrichtung bzw. Scheinwerfer in Betrieb) keinen relevanten Einfluss auf die Lichtfunktion der hinter der Abdeckung positionierten lichttechnischen Elemente aufweisen. Dies bedeutet, dass das Licht in der Warmerscheinung im Wesentlichen ungehindert durch die Abdeckung/Blende hindurchleuchten kann, ohne dass größere Lichtverluste auftreten. Gleichzeitig soll auch die Lichtverteilung nicht bzw. nur geringfügig beeinflusst werden.

Die Aufgabe wird gelöst durch einen Kraftfahrzeugscheinwerfer umfassend eine Leuchteneinrichtung mit lichttechnischen Elementen und eine der Leuchteneinrichtung in optischer Strahlrichtung nachgeschaltete Abdeckung, wobei die lichttechnischen Elemente der Leuchteneinrichtung hinter der Abdeckung verborgen sind, wobei die Abdeckung ein elektrisch aktivierbares Abdeckelement, das in Abhängigkeit einer angelegten elektrischen Spannung zwischen zumindest einem lichtdurchlässigen Zustand und einem lichtundurchlässigem Zustand für das von der Leuchteneinrichtung abgestrahlte Licht umschaltbar ist und das eine Innenfläche und eine Außenfläche aufweist, wobei der Kraftfahrzeugscheinwerfer erfindungsgemäß dadurch gekennzeichnet ist, dass die Abdeckung eine dem elektrisch aktivierbaren Abdeckelement in optischer Strahlrichtung nachgeschaltete teilweise lichtdurchlässige Schicht umfasst, wobei die teilweise lichtdurchlässige Schicht für sichtbares Licht einen Reflexionsgrad von 10% bis 40% aufweist.

Zur Lösung der Aufgabe wird also ein elektrisch aktivierbares Abdeckelement (z.B. eine elektrochrome Scheibe oder LC-Glas nach an sich bekannter Art) mit einer teilweise lichtdurchlässigen Schicht wie sie bei einem venezianischen Spiegel eingesetzt wird, kombiniert. Über das Anlegen einer elektrischen Spannung an das elektrisch aktivierbare Abdeckelement kann der Transmissionsgrad des Abdeckelements verändert werden. In der Kalterscheinung (d.h. Leuchteneinrichtung bzw. der Scheinwerfer ist nicht in Betrieb) wird das Abdeckelement lichtundurchlässig geschaltet, während in der Warmerscheinung (d.h. aktiver Betrieb der Leuchteneinrichtung bzw. des Scheinwerfers) das Abdeckelement ohne größere Lichtverluste für Licht durchlässig geschaltet werden kann.

Der Effekt eines venezianischen Spiegels ist wie erwähnt umso deutlicher ausgeprägt, umso größer der Helligkeitsunterschied zwischen der dunklen und der hellen Seite des Spiegels ist. In der Kalterscheinung der Leuchteneinrichtung bzw. des Scheinwerfers kann die elektrisch aktivierbare Scheibe einen lichtundurchlässigen Zustand einnehmen, weshalb der Bereich, der der Leuchteneinrichtung zugewandt ist, sehr dunkel wirkt. Infolgedessen kann der Reflexionsgrad der teilweise lichtdurchlässigen Schicht auf ein Minimum reduziert werden, ohne dass in der Kalterscheinung der Effekt eines venezianischen Spiegels, d.h. eine hochglänzende Verspiegelung, für den Betrachter verloren geht. Im Warmzustand wird das elektrisch aktivierbare Abdeckelement wieder auf lichttransparent geschalten. Ein minimaler Reflexionsgrad der teilweise lichtdurchlässigen Schicht hat den Vorteil, dass im aktiven Betriebszustand der Lichtmodule die Abdeckung einen hohen Transmissionsgrad aufweist. Im Vergleich zu den aus dem Stand der Technik bekannten, auf einem venezianischen Spiegel beruhenden Abdeckungen (Transmissionsgrad bei ca. 25%) kann der Transmissionsgrad der Abdeckung auf > 60% gesteigert werden, weshalb die Effizienz der Leuchteneinrichtung in einem akzeptablen Bereich bleibt. Der Lichtstrom bzw. die Lichtverteilung wird nur geringfügig beeinflusst, da einerseits der Reflexionsgrad der teilweise lichtdurchlässigen Schicht sehr klein gehalten wird und andererseits das elektrisch aktivierbare Abdeckelement im lichtdurchlässigen Zustand einen sehr hohen Transmissionsgrad aufweist.

Die Erfindung ermöglicht neue bislang nicht realisierbare Designs von Kraftfahrzeugscheinwerfern im ausgeschalteten Betriebszustand. Dank der Erfindung weist der Scheinwerfer in seiner Kalterscheinung ein dem Kundenwunsch entsprechendes hochglänzendes Erscheinungsbild auf, das den Warmerscheinungsbetrieb des Scheinwerfers nicht oder nur unwesentlich beeinflusst. Ferner besteht bei Scheinwerfern die Möglichkeit nicht nur in der Kalterscheinung, sondern auch im Tagfahrlichtbetrieb die Hauptlichtfunktionen hinter einer optisch aktiven Blende zu verbergen. Hinter der Abdeckung (hierin synonym auch als Blende bezeichnet) können nicht nur lichttechnisch relevante Bauteile wie Reflektoren, Linsen, Leuchtstäbe usw. vorborgen werden, sondern die Blende kann auch gleichzeitig genützt werden, um andere im Karosseriebau relevante konstruktive Ausgestaltungen wie Spaltmaße, Schwenkfugen (d.h. Freiraum zwischen feststehenden und beweglichen Blenden von z.B. Kurvenlichtmodulen) zu verdecken. Der erfindungsgemäße Kraftfahrzeugscheinwerfer hat aufgrund des hochglänzenden Erscheinungsbilds der Abdeckung in der Kalterscheinung ferner den Vorteil, dass teure hochwertige Designblenden eingespart werden können.

Der Begriff "Leuchteneinrichtung", hierin synonym auch als Leuchte bezeichnet, bezieht sich auf eine Kombination aus einem Leuchtmittel mit Bauelementen, welche die vom Leuchtmittel abgestrahlte elektromagnetische Strahlung beeinflussen und eine gewünschte Beleuchtungsstärkeverteilung (z.B. gesetzeskonformes Abblendlicht) vor das Kraftfahrzeug projizieren. Der Aufbau von Leuchteneinrichtungen einschließlich KFZ-Scheinwerfern ist hinlänglich bekannt und kann in Abhängigkeit der Art und Verwendung der Leuchteneinrichtung variieren. Die Leuchteneinrichtung kann beispielsweise Projektionssystem (Lichtquelle, Reflektorenanordnung, brechende Optikelemente mit/ohne Blenden), Reflexionssysteme (Lichtquelle, Reflektor), abbildende Systeme (Lichtquelle, Vorsatzoptik, mit/ohne zusätzlicher Abbildungslinsensysteme), Lichtleiter, leuchtende Platten, OLED-Elemente und jegliche andere Leuchtenbauteile, die einem Fachmann bekannt sind, umfassen. Als Lichtquellen können Halogenlampen, Xenonlampen (HID), LEDs, Laserlichtquellen und dergleichen Verwendung finden.

Die Abdeckung, hierin synonym auch als Blende bezeichnet, kommt bei Scheinwerfern zum Einsatz und ist für jedes beliebig ausgestaltete Scheinwerfermodul geeignet. Der Einsatzbereich der Erfindung ist besonders für die Anwendung in KFZ-Hauptscheinwerfern von Vorteil.

In Bezug auf die hierin synonym verwendeten Begriffe "lichtundurchlässig", "opak" und "lichtundurchlässiger Zustand" kann die Lichtdurchlässigkeit über den Transmissionsgrad τ definiert werden. Unter "opak" ist nach bekannter Art ein lichtundurchlässiger Zustand bei "milchigem" Betrachtungseindruck zu verstehen. Physikalisch bedeutet "lichtundurchlässig", dass keine VIS-Strahlung (380 ≤ λ ≤ 800 nm) durchdringt (τ =0); in Bezug auf die gegenständliche Offenbarung wird als obere Schranke für einen lichtundurchlässigen Zustand τ ≤001 angenommen, d.h. bis zu 1% einer auf ein Material auftreffenden Strahlungsintensität durchdringt dieses Material und kann auf der anderen Seite genutzt werden. Vorzugsweise ist jedoch τ =0.

Unter den hierin verwendeten Begriffen "lichtdurchlässig", "durchscheinend" und "transluzent" ist zu verstehen, dass das elektrisch aktivierbare Abdeckelement für sichtbares Licht passierbar ist. Für die Funktionalität von Scheinwerfern ist es wesentlich, wenn die einer Leuchteneinheit in optischer Strahlrichtung nachgeschaltete Abdeckungen eine sehr gute optische Transparenz, d.h. einen hohen Transmissionsgrad, aufweisen. Auf dem Gebiet der Scheinwerfertechnologie gibt es Zielgrößen für die Effizienz für die Lichtemission, deren physikalische Messgröße der Lichtstrom ist. Für Projektionsmodule liegen realistische Werte bei 30-40%, Reflexionsanwendungen erreichen bis zu 60%. Diese Werte ergeben sich aus den Verlusten im System (Reflexionsvermögen der Reflektoroberfläche, Absorptionsverluste in Linse und Abschlussscheibe) und einem geometrischen Nutzungsgrad, der vom verfügbaren Einbauraum, der Abstrahlcharakteristik der Lichtquelle und der Auslegungsstrategie des Lichttechnikers abhängt. Will man ein Projektionsmodul hinter einer Abdeckung verbergen und im Betriebszustand des Scheinwerfers noch akzeptable Effizienz erreichen, so beträgt der Transmissionsgrad der Abdeckung vorzugsweise etwa 50%.

Die "Innenfläche des Abdeckelements" ist jene Fläche des Abdeckelements, die der Leuchteneinrichtung zugewandt ist. Entsprechend ist unter der "Außenfläche des Abdeckelements" jene Fläche des Abdeckelements zu verstehen, die von der Leuchteneinrichtung abgewandt ist.

Der Begriff "Scheinwerfer" umfasst alle Arten von Kraftfahrzeugscheinwerfern, insbesondere Frontscheinwerfer und Heckleuchten.

Unter den Begriffen "teilweise lichtdurchlässige Schicht" bzw. "teilweise lichtdurchlässige Beschichtung" ist eine reflektierende Schicht bzw. Beschichtung nach der Art, wie sie bei Einwegspiegeln (venezianischer Spiegel, Spionspiegel) eingesetzt wird, zu verstehen. Derartige Schichten sind dem Fachmann bekannt.

Der Begriff "Kalterscheinung" bezieht sich darauf, dass die Leuchteneinrichtung bzw. der Scheinwerfer nicht in Betrieb ist. Der Begriff "Warmerscheinung" bezieht sich darauf, dass die Leuchteneinrichtung bzw. der Scheinwerfer in Betrieb ist und gesetzeskonforme Lichtverteilungen abstrahlt.

Zweckmäßigerweise weist die teilweise lichtdurchlässige Schicht für sichtbares Licht einen Reflexionsgrad von 10% bis 40% auf. Dies hat den Vorteil, dass im aktiven Betriebszustand der Leuchte die Abdeckung einen hohen Transmissionsgrad für sichtbares Licht aufweist. Dies ist vor allem für den KFZ-Scheinwerferbereich von großer Relevanz.

Noch mehr bevorzugt ist es, wenn die teilweise lichtdurchlässige Schicht für sichtbares Licht einen Reflexionsgrad von 10% bis 25% aufweist.

Die Herstellung bzw. das Aufbringen einer teilweise lichtdurchlässigen Beschichtung auf einer dem Betrachter zugewandten Oberfläche eines Trägersubstrats ist dem einschlägigen Fachmann bekannt. Um die für einen minimalen Reflexionsgrad erforderlichen dünnen Schichten zu erhalten, ist die teilweise lichtdurchlässige Schicht vorzugsweise aus einem Metalloxidmaterial hergestellt. Dabei wird die Oberfläche mit Metalloxiden (hoch und niedrig brechende Metalloxide) nach an sich bekannter Art bedampft, wobei eine Abfolge von Dünnschichten mit unterschiedlichem Brechungsindex aufgebracht wird, bis eine Gesamtschicht mit einem gewünschten Reflexionsgrad erreicht wird. Der Reflexionsgrad kann auch wellenlängenabhängig ausgeführt werden, so dass die Beschichtungen neben der Effizienzsteigerung auch zur Generierung von Farbeindrücken - speziell im Design der Kalterscheinung - genutzt werden können. Die genaue Zusammensetzung der Schichten und deren Dicke (typischerweise in einer Größenordnung von 25 nm bis 150 nm) sind vom jeweiligen Hersteller abhängig. Mehrschichtige Metalloxidschichten sowie Verfahren zum Aufbringen solcher Metalloxidschichten sind beispielsweise in der WO 2001/042821 A1 und der EP 2 492 251 A1 beschrieben. Zu den gängigen Materialien zählen MgF₂ (Magnesiumfluorid), SiO₂ (Siliziumdioxid), HfO₂ (Hafniumdioxid), TiO₂ (Titandioxid), Ta₂O₅ (Tantalpentoxid) und Nb₂O₅ (Niobpentoxid).

Bei einer besonders einfach zu realisierenden und effektiven ersten Ausführungsform der Abdeckung ist die teilweise lichtdurchlässige Schicht zumindest bereichsweise direkt auf der Außenfläche des Abdeckelements aufgebracht. Je nach gewünschtem Erscheinungsbild (Design) kann die gesamte Außenfläche oder nur ein Bereich der Außenfläche des Abdeckelements mit der teilweise lichtdurchlässigen Schicht beschichtet sein.

Um die Reflexion des von der Leuchteneinrichtung ausgestrahlten Lichts an den Grenzflächen des Abdeckelements, sogenannte Fresnelreflexionen, zu vermindern, ist es besonders von Vorteil, wenn auf der Innenfläche des Abdeckelements zumindest bereichsweise eine Antireflexbeschichtung (AR-Beschichtung, AR-coating) aufgebracht ist. Die Reflexionsgrad kann durch Aufbringen einer AR-Beschichtung auf der Innenfläche des Abdeckelements typischerweise um ca. 4% verringert werden; der Transmissionsgrad der Abdeckung wird dadurch erhöht. Vorzugsweise ist die gesamte Innenfläche des Abdeckelements mit der AR-Beschichtung beschichtet. AR-Beschichtungen und deren Herstellung sind dem einschlägigen Fachmann hinlänglich bekannt. Zu den gängigen Beschichtungsmaterialien zählen MgF₂ (Magnesiumfluorid), SiO₂ (Siliziumdioxid), HfO₂ (Hafniumdioxid), TiO₂ (Titandioxid), Ta₂O₅ (Tantalpentoxid) und Nb₂O₅ (Niobpentoxid). Durch Abstimmen der Wellenlänge der Antireflexbeschichtung können außerdem nach an sich bekannter Art farbliche Eindrücke auf der Abdeckung geschaffen werden.

Neben den zahlreichen zur Verfügung stehenden Antireflexbeschichtungen kann die Reflexion des von der Leuchteneinrichtung ausgestrahlten Lichts an den Grenzflächen des Abdeckelements auch über spezielle auf den Oberflächen des Abdeckelements aufgebrachte Nanostrukturen, sogenannte Mottenaugenstrukturen, vermindert werden (siehe z.B. Bläsi et al.. Entspiegeln mit Mottenaugenstrukturen. Kunststoffe 92 (2002) 5; Miller F., Nanostructured surfaces, Fraunhofer magazine 2.2005: 8-12). Diese Nanostrukturen kommen mit Vorteil bei Kunststoffoberflächen zur Anwendung, bei welchen sich das Bedampfen mit AR-Beschichtungen nach herkömmlichen Verfahren als schwierig gestaltet.

Bei einer weiteren Ausführungsform weist die Abdeckung ein lichtdurchlässiges Zwischenelement (z.B. eine lichtdurchlässige Glas- oder Kunststoffscheibe) mit einer Innenfläche und einer Außenfläche auf, wobei die Innenfläche des Zwischenelements der Außenfläche des Abdeckelements zugewandt ist und wobei die teilweise lichtdurchlässige Schicht zumindest bereichsweise auf der Außenfläche des Zwischenelements aufgebracht ist. In Analogie zu den Innen- und Außenflächen des Abdeckelements bezieht sich der Begriff "Innenfläche des Zwischenelements" auf jene Fläche des Zwischenelements, die der Leuchteneinrichtung zugewandt ist. Entsprechend ist unter der "Außenfläche des Zwischenelements" jene Fläche des Zwischenelements zu verstehen, die von der Leuchteneinrichtung abgewandt ist. Bei einer Variante ist die Innenfläche des Zwischenelements in direktem Kontakt zur Außenfläche des Abdeckelements angeordnet. Bei einer anderen Variante sind die Innenfläche des Zwischenelements und die Außenfläche des Abdeckelements voneinander beabstandet. Diese Ausführungsform ist aufgrund der zusätzlichen Grenzflächen im Vergleich zur oben beschriebenen ersten Ausführungsform weniger effizient und weist einen komplexeren Aufbau aus, weshalb sie weniger bevorzugt wird. Auch bei dieser Ausführungsform ist es von Vorteil, wenn die Innenfläche der Abdeckscheibe zumindest bereichsweise mit einer AR-Beschichtung gemäß den obigen Ausführungen beschichtet ist. Vorzugsweise ist die gesamte Innenfläche des Abdeckelements mit der AR-Beschichtung beschichtet. Darüber hinaus kann bei dieser Ausführungsform zusätzlich auch auf der Außenfläche des Abdeckelements zumindest bereichsweise eine AR-Beschichtung aufgebracht sein. Vorzugsweise ist die gesamte Außenfläche des Abdeckelements mit der AR-Beschichtung beschichtet. Durch eine AR-Beschichtung sowohl der Innen- als auch der Außenfläche des Abdeckelements kann der Reflexionsgrad von ca. 8% auf kleiner 0,5% reduziert werden.

Bei einer vorteilhaften Variante umfasst das elektrisch aktivierbare Abdeckelement ein elektrochromes Material. Derartige Abdeckelemente sind einem Fachmann auch unter den Namen "elektrochromes Glas", "elektrochrome Scheibe" oder "elektrochrome Zelle" bekannt und werden in gängiger Weise im KFZ-Bereich (Fahrzeugverglasungen, Rückspiegel, Scheinwerferblenden...) sowie bei Gebäudeverglasungen eingesetzt. Beispielsweise sind geeignete Abdeckelemente in der FR 2 605 086 B21, der FR 2 927 858 B1, der FR 2 965 889 A1 und der US 8,256,940 B2 beschrieben. Durch Anlegen einer elektrischen Spannung, in der Regel eine Gleichspannung, ändert sich die Lichtdurchlässigkeit der elektrochromen Scheibe. Je nach Technologie kann dieser Vorgang länger (mehrere Minuten) oder kürzer (< 1 sec) dauern. Häufig eingesetzte elektrochrome Materialien sind zum Beispiel Wolframoxid, Molybdäntrioxid, Polyanilin, Wolframtrioxid, Nickeloxid, Eisenhexacyanoferrat (Preußisch Blau), 3,4-Polyethylendioxithophen (PEDOT) und 3,4-Polyethylendioxypyrrol (PEDOP).

Weitere für die Erfindung geeignete elektrochrome Polymere sind der EP10273997 B1 zu entnehmen.

Alternativ zu elektrochromen Scheiben kann auch ein Glas, das in Liquid Crystal (LC)-Technologie ausgeführt ist (auch "LC-Glas" genannt), eingesetzt werden. Bei einer weiteren vorteilhaften Variante umfasst das elektrisch aktivierbare Abdeckelement daher ein LC-Glas. Das Herzstück der LC-Gläser ist ein Polymer-Flüssigkristallfilm, der zwischen zwei leitfähigen Scheiben eingebettet und an eine Stromquelle angeschlossen ist. LC-Gläser umfassen insbesondere PDLC-Gläser (Polymer Dispersed Liquid Crystals) und SPD-Elemente (Suspended Particle Devices). Vorzugsweise handelt es sich bei dem LC-Glas daher um ein PDLC-Glas oder um ein SPD-Element, mehr bevorzugt um ein SPD-Element. Der Aufbau und die Funktionsweise von PDLC-Gläsern bzw. SPD-Elementen sind dem einschlägigen Fachmann hinlänglich bekannt. Bei einem PDCL-Glas richten sich die Flüssigkristallmoleküle durch das Anlegen einer Spannung aus und das PDLC-Glas wird aufgrund des veränderten Streuverhaltens der Flüssigkristallmoleküle transparent. Ohne angelegte Spannung nimmt ein PDLC-Glas einen opaken Zustand (typischerweise milchig, undurchsichtiges Erscheinungsbild) ein. SPD-Elemente umfassen gelöste lichtabsorbierende, stäbchenförmige Schwebeteilchen, die sich aufgrund einer angelegten Spannung gleich ausrichten, so dass ein SPD-Glas transparent wird. Im stromlosen Zustand sind die Schwebeteilchen stochastisch verteilt, weshalb das SPD-Element einen lichtabsorbierenden Zustand einnimmt. Ein für die vorliegende Erfindung geeignetes LC-Glas ist beispielsweise in der oben genannten DE 8812322 U1 beschrieben.

Zweckmäßigerweise befindet sich das elektrisch aktivierbare Abdeckelement im lichtundurchlässigen Zustand, wenn die Leuchteneinrichtung nicht in Betrieb ist (Kalterscheinung) bzw. im lichtdurchlässigen Zustand, wenn die Leuchteneinrichtung in Betrieb ist (Warmerscheinung).

Der erfindungsgemäße Kraftfahrzeugscheinwerfer kann im gesamten KFZ-Bereich (z.B. PKW, LKW, Motorrad, etc....) zur Anwendung kommen. Die Abdeckung ist im KFZ-Scheinwerfer in optischer Strahlrichtung zwischen der Leuchteneinrichtung und einer Abschlussscheibe des Kraftfahrzeugscheinwerfers angeordnet. KFZ-Scheinwerfer inkludieren Frontscheinwerfer (auch als Hauptscheinwerfer bezeichnet) und Rückleuchten. Besonders vorteilhaft wird die Abdeckung jedoch in Frontscheinwerfern eingesetzt.

Die Erfindung wird im Folgenden anhand von nicht einschränkenden Beispielen und beiliegenden Zeichnungen näher beschrieben, wobei die Zeichnungen zeigen:
Fig. 1a zeigt eine schematische Darstellung einer Variante eines Frontscheinwerfers gemäß der Erfindung in einer Seitenansicht,
Fig. 1b zeigt eine schematische Darstellung einer weiteren Variante eines Frontscheinwerfers gemäß der Erfindung in einer Seitenansicht,
Fig. 2 zeigt eine Anordnung einer Leuchteneinrichtung und einer Ausführungsform der Abdeckung, wobei die Abdeckung im lichtdurchlässigen Zustand ist,
Fig. 3 zeigt die Anordnung aus Fig. 2, wobei die Abdeckung im lichtundurchlässigen Zustand ist,
Fig. 4 zeigt eine Anordnung einer Leuchteneinrichtung und einer weiteren Ausführungsform der Abdeckung, wobei die Abdeckung im lichtdurchlässigen Zustand ist,
Fig. 5 zeigt die Anordnung aus Fig. 4, wobei die Abdeckung im lichtundurchlässigen Zustand ist,
Fig. 6a und Fig. 6b zeigen das bekannte Funktionsprinzip eines LC-Glases,
Fig. 7 zeigt beispielhaft den Schichtaufbau einer teilweise lichtdurchlässigen Schicht,
Fig. 8a zeigt die Fresnelreflexion an einem Glassubstrat, und
Fig. 8b zeigt die Fresnelreflexion an einem Glassubstrat, das mit einer Antireflexbeschichtung beschichtet ist.

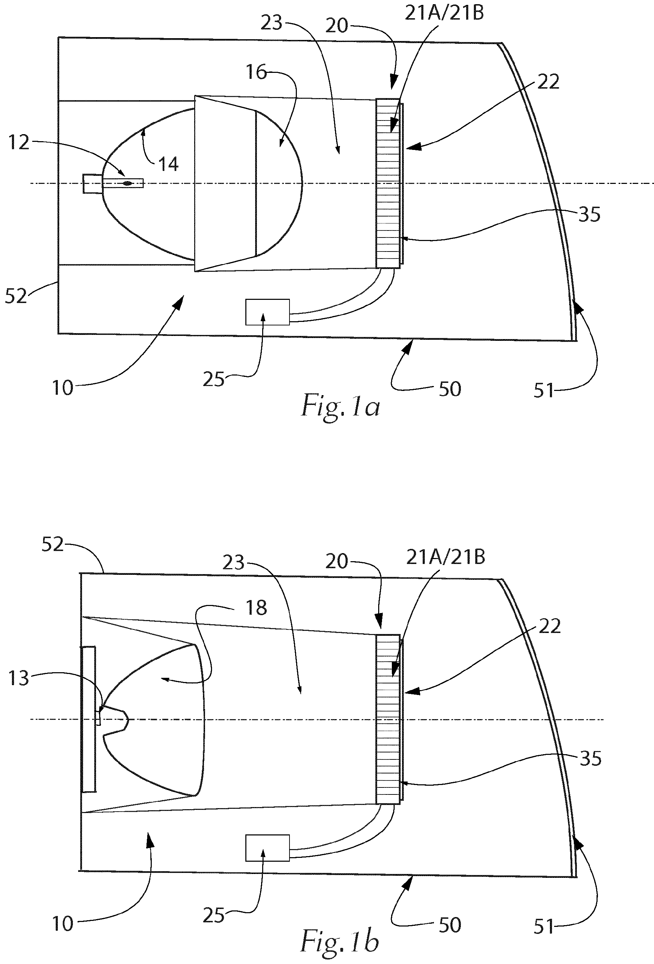

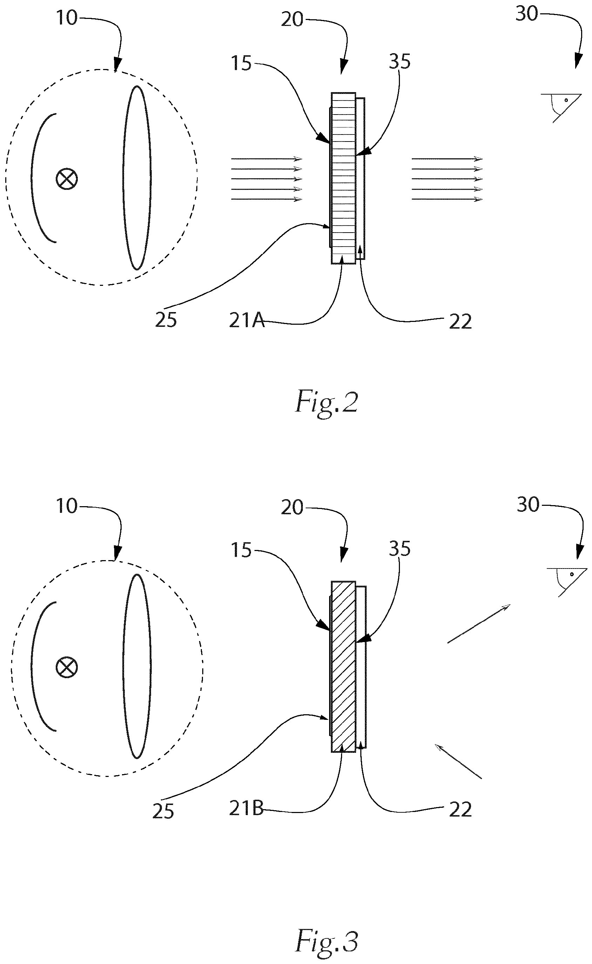

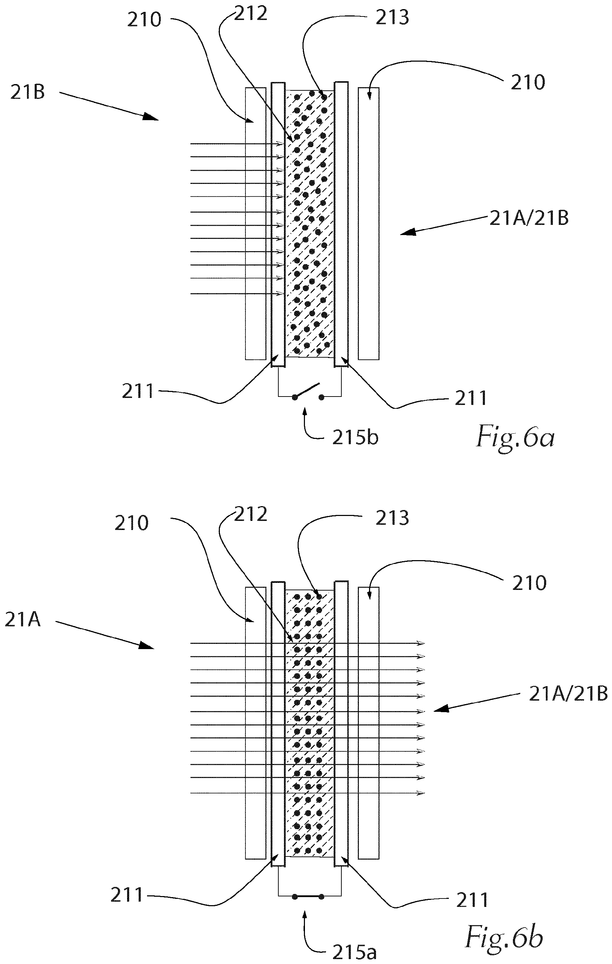

Fig. 1a und Fig. 1b zeigen eine schematische Darstellung von zwei Varianten eines Hauptscheinwerfers 50 für ein Kraftfahrzeug, jeweils in Seitenansicht (transparent dargestellt). Der Hauptscheinwerfer 50 umfasst ein Gehäuse 52 mit einer Abschlussscheibe 51. Im Gehäuse 52 ist eine optische Leuchteneinrichtung 10 für Scheinwerfer angeordnet. Die Leuchteneinrichtung 10 ist nach an sich bekannter Art aufgebaut und kann beispielsweise Projektionssysteme (Lichtquelle, Reflektor, Linse mit/ohne Blende), Reflexionssysteme (Lichtquelle, Reflektor), abbildende Systeme (Lichtquelle, Vorsatzoptik, mit/ohne zusätzlicher Abbildungslinse), Lichtleiter (z.B. Leuchtstäbe), leuchtende Platten, OLED-Elemente und jegliche andere Leuchtenbauteile, die einem Fachmann bekannt sind, umfassen. Als Lichtquellen können Halogenlampen, Xenonlampen (LED), LEDs, Laserlichtquellen und dergleichen Verwendung finden. Die Leuchteneinrichtung 10 gemäß der Fig. 1a ist ein klassisches Projektionsmodul mit einem Sockel einer Xenon-Lampe 12 (Hochdruck-Entladungs(HID)-Lampe), einem Reflektor 14 mit elliptischer Grundform und einer Projektions-Linse 16. Bei der Leuchteneinrichtung 10 gemäß der Fig. 1b handelt es sich um ein abbildendes System 18 mit LED 13 in Vorsatzoptik. Zwischen der Leuchteneinrichtung 10 und der Abschlussscheibe 51 ist in optischer Strahlrichtung eine Abdeckung 20 (auch als Blende 20 bezeichnet) angeordnet. Die in Fig. 1a und Fig. 1b gezeigte Blende besteht aus einem scheibenförmigen LC-Glas 21A/21B nach an sich bekannter Art (für die Beschreibung der Funktionsprinzip eines LC-Glases siehe Fig. 6a und Fig. 6b) sowie eine auf einer Außenfläche 35 des elektrochromen Elements 21A/21B aufgebrachte teilweise lichtdurchlässige Schicht 22 nach an sich bekannter Art (venezianischer Spiegel). Anstelle des LC-Glases kann ein elektrochromes Element nach an sich bekannter Art eingesetzt werden. Das LC-Glas 21A/21B ist an eine Stromquelle 25 angeschlossen. In Abhängigkeit einer angelegten Spannung ist das LC-Glas 21A/21B zwischen einem lichtdurchlässigen Zustand 21A (vlg. Fig. 6b) und einem lichtundurchlässigen/ opaken Zustand 21B (vgl. Fig. 6a) umschaltbar:
- In der Warmerscheinung des Scheinwerfers 50 (d.h. die Leuchteneinrichtung 10 bzw. der Scheinwerfer 50 ist in Betrieb), ist das LC-Glas 21A/21B in den lichtdurchlässigen Zustand 21A geschaltet (vgl. Fig. 6b). Das durch die Leuchteinrichtung 10 generierte Licht kann dadurch durch die Blende 20 und die Abschlussscheibe 51 hindurch nach außen treten.
- In der Kalterscheinung des Scheinwerfers 50 (d.h. die Leuchteneinrichtung 10 bzw. der Scheinwerfer 50 ist ausgeschalten) befindet sich das LC-Glas 21A/21B hingegen im lichtundurchlässigen Zustand 21B (vgl. Fig. 6a). Der zur Leuchteneinrichtung 10 gerichtete Bereich 23 hinter der Blende 20 wird folglich sehr dunkel dargestellt, weshalb der Effekt der teilweise halbdurchlässigen Schicht 22, d.h. eine hochglänzende Darstellung der Blende 20 für einen außen stehenden Betrachter 30 (vgl. Fig. 2-5), sehr deutlich ausgeprägt ist.

Fig. 2 zeigt eine Anordnung einer Leuchteneinrichtung 10 in ihrer Warmerscheinung wie oben beschrieben und einer vorteilhaften Ausführungsform der Blende 20, wobei die Blende 20 in der Warmerscheinung auf lichtdurchlässig geschaltet ist. Fig. 3 zeigt die Anordnung aus Fig. 2, wobei die Leuchteneinrichtung 10 nicht in Betrieb ist (Kalterscheinung) und die Blende 20 daher opak geschaltet ist. Wie oben zu Fig. 1a und Fig. 1b beschrieben umfasst die Abdeckung 20 ein LC-Glas 21A/21B (alternativ ein elektrochromes Element), das mittels einer elektrischen Spannung zwischen einem lichtdurchlässigen Zustand 21A (Strom ein; Fig. 2 und Fig. 6b) und einem lichtundurchlässigen/opaken Zustand 21B (Strom aus; Fig. 3 und Fig. 6a) nach an sich bekannter Weise umschaltbar ist. Das LC-Glas 21A/21B hat eine der Leuchteneinrichtung zugewandte Innenfläche 15 und eine dem Betrachter 30 zugewandte Außenfläche 35. An der dem Betrachter 30 zugewandten Außenfläche 35 des LC-Glases 21A/21B ist eine teilweise lichtdurchlässige Schicht 22 nach an sich bekannter Art (venezianischer Spiegel) aufgebracht. In der Kalterscheinung (Fig. 3) erscheint die Schicht 22 für den Betrachter 30 als eine hochglänzende und die lichttechnischen Elemente der Leuchteinrichtung 10 verdeckende Blende. Um die Reflexion des von der Leuchteneinrichtung 10 ausgestrahlten Lichts an einer Innenfläche 15 des LC-Glases 21A/21B zu vermindern, ist auf der Innenfläche 15 noch zusätzlich eine Antireflexbeschichtung 25 (AR-Beschichtung, AR-coating) aufgebracht. Die AR-Beschichtung 25 wird durch Bedampfung mit einem Metalloxid hergestellt.

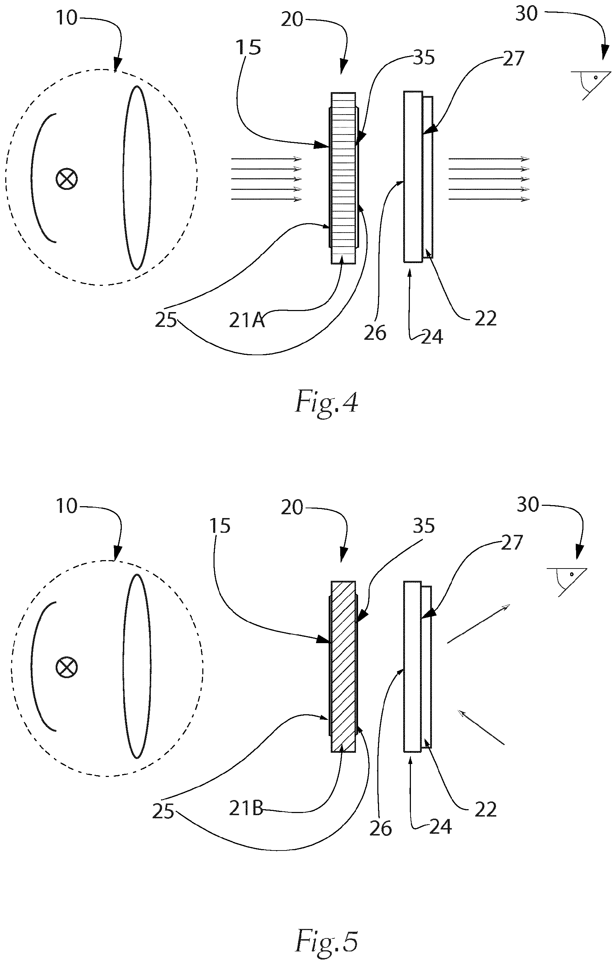

Fig. 4 zeigt eine Anordnung einer Leuchteneinrichtung 10 und einer weiteren Ausführungsform der Blende 20, wobei die Blende 20 in der Warmerscheinung auf lichtdurchlässig geschaltet ist. Fig. 5 zeigt die Anordnung aus Fig. 4, wobei die Leuchteneinrichtung 10 nicht in Betrieb ist (Kalterscheinung) und die Blende 20 daher opak geschaltet ist. Wie oben zu Fig. 1a und Fig. 1b beschrieben umfasst die Blende 20 ein LC-Glas 21A/21B (alternativ ein elektrochromes Element), das mittels einer elektrischen Spannung zwischen einem lichtdurchlässigen Zustand 21A (Strom ein; Fig. 2 und Fig. 6b) und einem lichtundurchlässigen/ opaken Zustand 21B (Strom aus; Fig. 3 und Fig. 6a) nach an sich bekannter Weise umschaltbar ist. Das LC-Glas 21A/21B hat eine der Leuchteneinrichtung zugewandte Innenfläche 15 und eine dem Betrachter 30 zugewandte Außenfläche 35. Um die Reflexion des von der Leuchteneinrichtung 10 ausgestrahlten Lichts an der Innenfläche 15 bzw. der Außenfläche 35 des LC-Glases 21A/21B zu vermindern, ist sowohl auf der Innenfläche 15 als auch auf der Außenfläche 35 noch zusätzlich eine Antireflexbeschichtung 25 (AR-Beschichtung, AR-coating) aufgebracht. Die AR-Beschichtung 25 wird durch Vakuumaufdampfverfahren bzw.

Beschichtungstechniken unter Nutzung von CVD-Prozessen (Chemical Vapour Deposition) oder PVD-Prozessen (Physical Vapour Depositio) mit z.B. Metalloxiden hergestellt. Die Blende 20 umfasst ferner ein transparentes Zwischenelement 24 (Scheibe aus Glas oder einem Polymermaterial) mit einer Innenfläche 26 und einer Außenfläche 27. Das Zwischenelement 24 ist dem LC-Glas 21A/21B in optischer Strahlrichtung nachgeschaltet und von diesem beabstandet. Auf der dem Betrachter 30 zugewandten Außenfläche 27 des Zwischenelements 24 ist eine teilweise lichtdurchlässige Schicht 22 nach an sich bekannter Art (venezianischer Spiegel) aufgebracht. In der Kalterscheinung (Fig. 5) erscheint die Schicht 22 für den Betrachter 30 als hochglänzende und die lichttechnischen Elemente der Leuchteneinrichtung 10 verdeckende Blende.

Die in den Fig. 2 und 3 gezeigte Ausführungsform der Blende 20 wird aufgrund ihres einfacheren Aufbaus und ihrer größeren Effizienz gegenüber der in den Fig. 4 und 5 gezeigten anderen Ausführungsform bevorzugt.

In den Fig. 6a und Fig. 6b ist das an sich bekannte Funktionsprinzip eines LC-Glases bzw. einer elektrochromen Zelle, hier beispielhaft anhand des in den Figuren gezeigten LC-Glases 21A/21B, dargestellt. Fig. 6a zeigt das LC-Glas 21A/21B in seinem lichtundurchlässigen Zustand 21B (Strom aus; Bezugszeichen 215b), wohingegen Fig. 6b das LC-Glas in seinem lichtdurchlässigen Zustand 21A bei angelegter Spannung zeigt (Strom ein; Bezugszeichen 215a). Das LC-Glas 21A/21B besteht aus einem Polymer-Flüssigkristall-Film 212 mit darin gelösten Flüssigkristallen 213. Der Polymer-Flüssigkristallfilm 212 ist zwischen zwei leitfähigen Schichten 211, beispielsweise Indiumzinnoxid(ITO)-Schichten, eingebettet. Dieses Konstrukt ist wiederum zwischen zwei Deckgläsern 210 eingebettet. Wird an die beiden leitfähigen Schichten 211 eine elektrische Spannung angelegt, dann richten sich die im stromlosen Zustand im Polymer-Flüssigkristallfilm 212 willkürlich angeordneten gelösten Flüssigkristalle 213 in eine Vorzugsrichtung aus und das LC-Glas 21A/21B nimmt seinen lichtdurchlässigen Zustand ein (Fig. 6b). Wird die Spannung weggenommen, dann nehmen die gelösten Flüssigkristalle wieder ihren ungeordneten Zustand ein und das LC-Glas 21A/21B wird wieder opak (Fig. 6a).

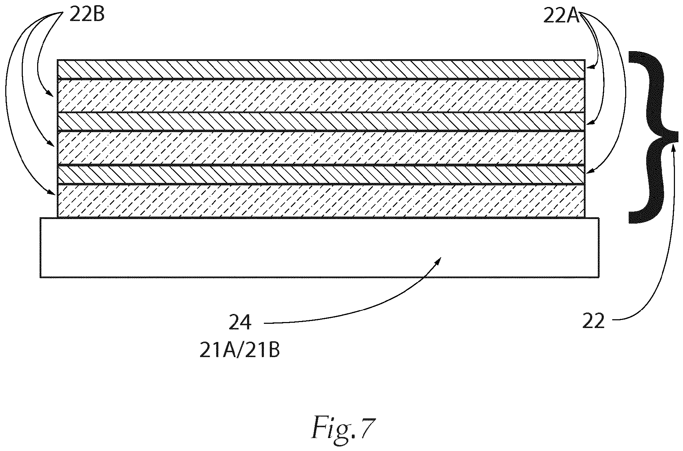

Fig. 7 zeigt beispielhaft den Schichtaufbau einer mehrschichtigen teilweise lichtdurchlässigen Schicht 22, die auf einem Trägersubstrat 21A/21B, 24 (siehe LC-Glas 21A/21B gemäß Fig. 2 und 3 bzw. das Zwischenelement 24 gemäß Fig. 4 und 5) aufgebracht ist. Die Schicht 22 besitzt einen dreifachen Schichtaufbau aus einem ersten Metalloxidmaterial 22A (z.B. SiO₂) und einem zweiten Metalloxidmaterial 22B (z.B. TiO₂). Zur Herstellung des in Fig. 7 dargestellten Schichtaufbaus wird die Oberfläche des Trägersubstrats 21A/21B, 24 mit Metalloxiden (hoch und niedrig brechende Metalloxide) nach an sich bekannter Art bedampft. Dadurch wird auf dem Trägersubstrat 21A/21B, 24 eine Abfolge von Dünnschichten mit unterschiedlichem Brechungsindex aufgebracht, bis die Schicht 22 den gewünschten Reflexionsgrad erreicht hat. Mehrschichtige Metalloxidschichten sowie Verfahren zum Aufbringen solcher Metalloxidschichten sind beispielsweise in der WO 2001/042821 A1 und der EP 2 492 251 A1 beschrieben. Zu den gängigen Materialien zählen MgF₂ (Magnesiumfluorid), SiO₂ (Siliziumdioxid), HfO₂ (Hafniumdioxid), TiO₂ (Titandioxid), Ta₂O₅ (Tantalpentoxid) und Nb₂O₅ (Niobpentoxid).

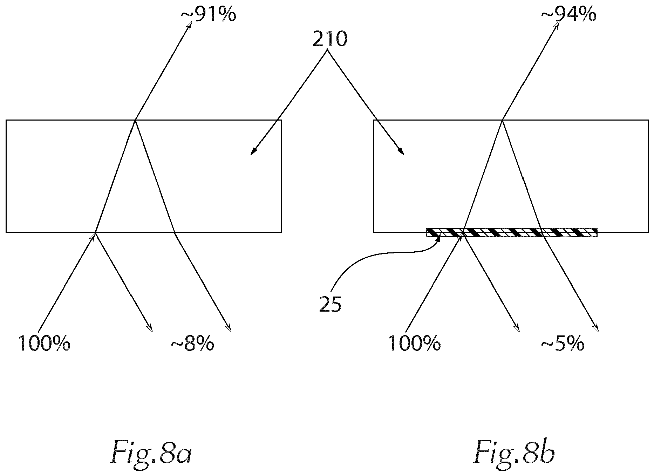

Fig. 8a zeigt das Transmissions- und Absorptionsverhalten von Licht (Fresnelsche Formeln) an einer transparenten Scheibe 210, im Beispiel ein transparentes Glassubstrat 210. Die angegebenen Prozentangaben entsprechen sinnvollen und nicht als einschränkend zu betrachtenden Richtwerten. Trifft Licht auf die transparente Scheibe 210 auf, so wird ein Teil des Lichts an den Grenzflächen der Scheibe 210 reflektiert. Der restliche Teil breitet sich durch die Scheibe 210 aus (Transmission). Bei normalem Lichteinfall und einem Brechungsindex von n = 1,50 beträgt der Reflexionsgrad einer transparenten Scheibe pro Grenzflächenübergang ca. 4%, d.h. in Summe ca. 8%. Bei größerem Einfallswinkel ist die Reflektivität entsprechend höher; dieser Sachverhalt wird durch die Fresnelschen Formeln beschrieben. Der Transmissionsgrad liegt insgesamt bei ca. 91%, wobei materialbedingte Absorptionsverluste (typischerweise zwischen 0,5 - 1%) berücksichtigt sind.

Fig. 8b zeigt das Transmissions- und Absorptionsverhalten von Licht (Fresnelsche Formeln) an der transparenten Scheibe 210, wenn diese an einer Grenzfläche zusätzlich mit einer Antireflexbeschichtung 25 beschichtet ist. Durch die AR-Beschichtung 25 wird die Reflexion an der Grenzfläche verringert und der Transmissionsgrad der Scheibe 210 erhöht (94%).

### Beispiel:

Im Folgenden ist ein beispielhafter Vergleich des Transmissionsgrads verschiedener Abdeckungen (Blenden) anhand von sinnvollen und nicht einschränkenden Richtwerten angeführt. Die tatsächlichen Effizienzen (Reflexionsgrad, Transmissionsgrad, sowie Absorptionsverluste) der einzelnen Komponenten sind einerseits von der Wahl der Materialien und andererseits von den Anforderungen an den Einsichtschutz (kundenabhängiger subjektiver Parameter) sowie dem erforderlichen Gesamttransmissionsgrad abhängig.

### Abdeckung gemäß dem Stand der Technik (nur teilweise lichtdurchlässiger Spiegel):

Teilweise lichtdurchlässiger Spiegel: Reflexionsgrad ~ 70%
Fresnelreflexionen: ~ 4%
Transmissionsgrad (gesamt): 100% - 70% - 4% = ~ 26%

### Abdeckung (elektrochromes Abdeckelement/LC-Glas + teilweise lichtdurchlässige Beschichtung) für einen erfindungsgemäßen Kraftfahrzeugscheinwerfer:

Elektrochromes Abdeckelement/LC-Glas: Transmissionsgrad ∼ 75%
Teilweise lichtdurchlässige Schicht: Reflexionsgrad ~ 10%
Fresnelreflexionen: Reflexionsgrad ~ 4%
Transmissionsgrad (gesamt): 75% -10% - 4% = 61%

### Abdeckung (elektrochromes Abdeckelement/LC-Glas + teilweise lichtdurchlässige Beschichtung + AR-Beschichtung) für einen erfindungsgemäßen Kraftfahrzeugscheinwerfer:

Elektrochromes Abdeckelement/LC-Glas: Transmissionsgrad ∼ 75%
Teilweise lichtdurchlässige Schicht: Reflexionsgrad ~ 10%
Transmissionsgrad (gesamt): 75% -10% = 65%

Der beispielhafte Vergleich zeigt, dass der Transmissionsgrad durch die Erfindung von ~ 26% (Stand der Technik, nur teilweise lichtdurchlässiger Spiegel) auf ~ 60-70% angehoben werden kann.

## Patentansprüche

1. Kraftfahrzeugscheinwerfer umfassend eine Leuchteneinrichtung (10) mit lichttechnischen Elementen und eine der Leuchteneinrichtung (10) in optischer Strahlrichtung nachgeschaltete Abdeckung (20), wobei die lichttechnischen Elemente der Leuchteneinrichtung (10) hinter der Abdeckung (20) verborgen sind, wobei die Abdeckung (20) ein elektrisch aktivierbares Abdeckelement (21A, 21B), das in Abhängigkeit einer angelegten elektrischen Spannung zwischen zumindest einem lichtdurchlässigen Zustand (21A) und einem lichtundurchlässigem Zustand (21B) für das von der Leuchteneinrichtung (10) abgestrahlte Licht umschaltbar ist und das eine Innenfläche (15) und eine Außenfläche (35) aufweist, **dadurch gekennzeichnet, dass** die Abdeckung (20) eine dem elektrisch aktivierbaren Abdeckelement (21A, 21B) in optischer Strahlrichtung nachgeschaltete teilweise lichtdurchlässige Schicht (22) umfasst, wobei die teilweise lichtdurchlässige Schicht (22) für sichtbares Licht einen Reflexionsgrad von 10% bis 40% aufweist.

2. Kraftfahrzeugscheinwerfer nach Anspruch 1, **dadurch gekennzeichnet, dass** die teilweise lichtdurchlässige Schicht (22) zumindest bereichsweise auf der Außenfläche (35) des Abdeckelements (21A, 21B) aufgebracht ist.

3. Kraftfahrzeugscheinwerfer nach Anspruch 2, **dadurch gekennzeichnet, dass** die teilweise lichtdurchlässige Schicht (22) auf der gesamten Außenfläche (35) des Abdeckelements (21A, 21B) aufgebracht ist.

4. Kraftfahrzeugscheinwerfer nach Anspruch 1, **dadurch gekennzeichnet, dass** die Abdeckung (20) ein lichtdurchlässiges Zwischenelement (24) mit einer Innenfläche (26) und einer Außenfläche (27) aufweist, wobei die Innenfläche (26) des Zwischenelements (24) der Außenfläche (35) des Abdeckelements (21A, 21B) zugewandt ist und wobei die teilweise lichtdurchlässige Schicht (22) zumindest bereichsweise auf der Außenfläche (27) des Zwischenelements (24) aufgebracht ist.

5. Kraftfahrzeugscheinwerfer nach einem der Ansprüche 1 bis 4, **dadurch gekennzeichnet, dass** auf der Innenfläche (15) des Abdeckelements (21A, 21B) zumindest bereichsweise eine Antireflexbeschichtung (25) aufgebracht ist.

6. Kraftfahrzeugscheinwerfer nach Anspruch 4 und 5, **dadurch gekennzeichnet, dass** auch auf der Außenfläche (35) des Abdeckelements (21A, 21B) zumindest bereichsweise eine Antireflexbeschichtung (25) aufgebracht ist.

7. Kraftfahrzeugscheinwerfer nach einem der Ansprüche 1 bis 6, **dadurch gekennzeichnet, dass** die teilweise lichtdurchlässige Schicht (22) für sichtbares Licht einen Reflexionsgrad von 10% bis 25% aufweist.

8. Kraftfahrzeugscheinwerfer nach einem der Ansprüche 1 bis 7, **dadurch gekennzeichnet, dass** die teilweise lichtdurchlässige Schicht (22) aus einem Metalloxidmaterial hergestellt ist.

9. Kraftfahrzeugscheinwerfer nach einem der Ansprüche 1 bis 8, **dadurch gekennzeichnet, dass** das elektrisch aktivierbare Abdeckelement ein elektrochromes Material umfasst.

10. Kraftfahrzeugscheinwerfer nach einem der Ansprüche 1 bis 8, **dadurch gekennzeichnet, dass** das elektrisch aktivierbare Abdeckelement (21A, 21B) ein Glas umfasst, das in Liquid Crystal (LC)-Technologie ausgeführt ist.

11. Kraftfahrzeugscheinwerfer nach einem der Ansprüche 1 bis 10, **dadurch gekennzeichnet, dass** sich das elektrisch aktivierbare Abdeckelement (21A, 21B) im lichtundurchlässigen Zustand (21B) befindet, wenn die Leuchteneinrichtung (10) nicht im Betrieb ist, und dass sich das elektrisch aktivierbare Abdeckelement (21A, 21B) im lichtdurchlässigen Zustand (21A) befindet, wenn die Leuchteneinrichtung (10) im Betrieb ist.

12. Kraftfahrzeugscheinwerfer nach einem der Ansprüche 1 bis 11, **dadurch gekennzeichnet, dass** es sich bei dem Kraftfahrzeugscheinwerfer um einen Frontscheinwerfer oder um eine Heckleuchte handelt.

13. Kraftfahrzeugscheinwerfer nach Anspruch 12, **dadurch gekennzeichnet, dass** der Kraftfahrzeugscheinwerfer ein Frontscheinwerfer ist.

14. Kraftfahrzeugscheinwerfer nach einem der Ansprüche 1 bis 13, **dadurch gekennzeichnet, dass** die Abdeckung (20) im Kraftfahrzeugscheinwerfer in optischer Strahlrichtung zwischen der Leuchteneinrichtung (10) und einer Abschlussscheibe (51) des Kraftfahrzeugscheinwerfers angeordnet ist.

## Claims

1. A motor-vehicle headlamp comprising a lighting device (10) having lighting elements and a cover (20) connected downstream of the lighting device (10) in the optical beam direction, the lighting elements of the lighting device (10) being hidden behind the cover (20), the cover (20) having an electrically activable cover element (21A, 21B), which can be switched, as a function of an applied electric voltage, between at least one transparent state (21A) and a non-transparent state (21B) for the light emitted by the lighting device (10) and which has an inner surface (15) and an outer surface (35), **characterized in that** the cover (20) comprises a partially transparent layer (22) connected downstream of the electrically activable cover element (21A, 21B) in the optical beam direction, wherein the partially transparent layer (22) has a reflectance for visible light of 10% to 40%.

2. The motor-vehicle headlamp according to Claim 1, **characterized in that** the partially transparent layer (22) is applied on the outer surface (35) of the cover element (21A, 21B) at least in certain regions.

3. The motor-vehicle headlamp according to Claim 2, **characterized in that** the partially transparent layer (22) is applied on the whole outer surface (35) of the cover element (21A, 21B).

4. The motor-vehicle headlamp according to Claim 1, **characterized in that** the cover (20) has a transparent intermediate element (24) with an inner surface (26) and an outer surface (27), wherein the inner surface (26) of the intermediate element (24) faces the outer surface (35) of the cover element (21A, 21B) and wherein the partially transparent layer (22) is applied on the outer surface (27) of the intermediate element (24) at least in certain regions.

5. The motor-vehicle headlamp according to one of Claims 1 to 4, **characterized in that** an anti-reflection coating (25) is applied on the inner surface (15) of the cover element (21A, 21B) at least in certain regions.

6. The motor-vehicle headlamp according to Claims 4 and 5, **characterized in that** an anti-reflection coating (25) is also applied on the outer surface (35) of the cover element (21A, 21B) at least in certain regions.

7. The motor-vehicle headlamp according to one of Claims 1 to 6, **characterized in that** the partially transparent layer (22) has a reflectance for visible light of 10% to 25%.

8. The motor-vehicle headlamp according to one of Claims 1 to 7, **characterized in that** the partially transparent layer (22) is produced from a metal oxide material.

9. The motor-vehicle headlamp according to one of Claims 1 to 8, **characterized in that** the electrically activable cover element comprises an electrochromic material.

10. The motor-vehicle headlamp according to one of Claims 1 to 8, **characterized in that** the electrically activable cover element (21A, 21B) comprises a glass, which is realized in liquid crystal (LC) technology.

11. The motor-vehicle headlamp according to one of Claims 1 to 10, **characterized in that** the electrically activable cover element (21A, 21B) is in the non-transparent state (21B) when the lighting device (10) is not in operation, and **in that** the electrically activable cover element (21A, 21B) is in the transparent state (21A) when the lighting device (10) is in operation.

12. The motor-vehicle headlamp according to one of Claims 1 to 11, **characterized in that** the motor-vehicle headlamp is a front headlamp or a rear light.

13. The motor-vehicle headlamp according to Claim 12, **characterized in that** the motor-vehicle headlamp is a front headlamp.

14. The motor-vehicle headlamp according to one of Claims 1 to 13, **characterized in that** the cover (20) is arranged in the motor-vehicle headlamp between the lighting device (10) and a lens (51) of the motor-vehicle headlamp in the optical beam direction.

## Revendications

1. Projecteur de véhicule automobile comprenant un dispositif d'éclairage (10) avec des éléments techniques d'éclairage et une couverture (20) montée en aval du dispositif d'éclairage (10) dans la direction optique du faisceau, les éléments techniques d'éclairage du dispositif d'éclairage (10) étant dissimulés derrière la couverture (20), la couverture (20) étant un élément de couverture (21A, 21B), pouvant être réversible entre au moins un état transparent (21A) et un état opaque (21B) en fonction d'une tension électrique appliquée pour la lumière émise par le dispositif d'éclairage (10) et qui comporte une surface intérieure (15) et une surface extérieure (35), **caractérisé en ce que** la couverture (20) comprend une couche en partie transparente (22) montée en aval de l'élément de couverture (21A, 21B) pouvant être actionné électriquement dans la direction optique du faisceau, la couche en partie transparente (22) pour la lumière visible comportant un facteur de réflexion de 10 % à 40 %.

2. Projecteur de véhicule automobile selon la revendication 1, **caractérisé en ce que** la couche en partie transparente (22) est appliquée au moins par zone sur la surface extérieure (35) de l'élément de couverture (21A, 21B).

3. Projecteur de véhicule automobile selon la revendication 2, **caractérisé en ce que** la couche en partie transparente (22) est appliquée sur toute la surface extérieure (35) de l'élément de couverture (21A, 21B).

4. Projecteur de véhicule automobile selon la revendication 1, **caractérisé en ce que** la couverture (20) comporte un élément intermédiaire transparent (24) avec une surface intérieure (26) et une surface extérieure (27), la surface intérieure (26) de l'élément intermédiaire (24) étant tournée vers la surface extérieure (35) de l'élément de couverture (21A, 21B) et la couche en partie transparente (22) étant appliquée au moins par zone sur la surface extérieure (27) de l'élément intermédiaire (24).

5. Projecteur de véhicule automobile selon l'une quelconque des revendications 1 à 4, **caractérisé en ce qu'**un revêtement antireflet (25) est appliqué au moins par zone sur la surface intérieure (15) de l'élément de couverture (21A, 21B).

6. Projecteur de véhicule automobile selon la revendication 4 et 5, **caractérisé en ce qu'**un revêtement antireflet (25) est également appliqué au moins par zone sur la surface extérieure (35) de l'élément de couverture (21A, 21B).

7. Projecteur de véhicule automobile selon l'une quelconque des revendications 1 à 6, **caractérisé en ce que** la couche en partie transparente (22) pour la lumière visible comporte un facteur de réflexion de 10% à 25%.

8. Projecteur de véhicule automobile selon l'une quelconque des revendications 1 à 7, **caractérisé en ce que** la couche en partie transparente (22) est fabriquée à partir d'un matériau à base d'oxyde métallique.

9. Projecteur de véhicule automobile selon l'une quelconque des revendications 1 à 8, **caractérisé en ce que** l'élément de couverture pouvant être actionné électriquement comprend un matériau électrochrome.

10. Projecteur de véhicule automobile selon l'une quelconque des revendications 1 à 8, **caractérisé en ce que** l'élément de couverture pouvant être actionné électriquement (21A, 21B) comprend un verre, qui est exécuté selon la technologie des cristaux liquides (CL) .

11. Projecteur de véhicule automobile selon l'une quelconque des revendications 1 à 10, **caractérisé en ce que** l'élément de couverture pouvant être actionné électriquement (21A, 21B) se trouve dans un état opaque (21B), si le dispositif d'éclairage (10) n'est pas en fonction et l'élément de couverture pouvant être actionné électriquement (21A, 21B) se trouve à l'état transparent (21A), lorsque le dispositif d'éclairage (10) est en fonction.

12. Projecteur de véhicule automobile selon l'une quelconque des revendications 1 à 11, **caractérisé en ce que** concernant le projecteur de véhicule automobile, il s'agit d'un projecteur avant ou d'un feu arrière.

13. Projecteur de véhicule automobile selon la revendication 12, **caractérisé en ce que** le projecteur de véhicule automobile est un projecteur avant.

14. Projecteur de véhicule automobile selon l'une quelconque des revendications 1 à 13, **caractérisé en ce que** la couverture (20) dans le projecteur de véhicule automobile est disposée dans la direction optique du faisceau entre le dispositif d'éclairage (10) et un verre d'obturation (51) du projecteur de véhicule automobile.
